(19) Europäisches Patentamt / European Patent Office / Office européen des brevets

(11) **EP 2 018 929 B1**

(12) **EUROPEAN PATENT SPECIFICATION**

(45) Date of publication and mention
of the grant of the patent:
**12.08.2015  Bulletin 2015/33**

(21) Application number: **07743252.4**

(22) Date of filing: **08.05.2007**

(51) Int Cl.:
***B23K 9/02*** *(2006.01)*    ***B23K 9/00*** *(2006.01)*
***B63B 3/34*** *(2006.01)*

(86) International application number:
**PCT/JP2007/059817**

(87) International publication number:
**WO 2007/132794 (22.11.2007 Gazette 2007/47)**

(54) **WELDED STRUCTURE EXCELLENT IN BRITTLE-CRACKING PROPAGATION STOPPING CHARACTERISTICS**

GESCHWEISSTE STRUKTUR MIT HERVORRAGENDEN SPRÖDBRUCHAUSBREITUNGSANHALTEEIGENSCHAFTEN

STRUCTURE SOUDÉE PRÉSENTANT D'EXCELLENTES CAPACITÉS À ARRÊTER LA PROPAGATION DE FISSURES FRAGILES

(84) Designated Contracting States:
**DK**

(30) Priority: **12.05.2006   JP 2006133487**
**17.10.2006   JP 2006282132**

(43) Date of publication of application:
**28.01.2009   Bulletin 2009/05**

(73) Proprietors:
• **JFE Steel Corporation**
**Tokyo, 100-0011 (JP)**
• **Japan Marine United Corporation**
**Minato-ku,**
**Tokyo 108-0014 (JP)**

(72) Inventors:
• **HANDA, Tsunehisa**
**Tokyo 100-0011 (JP)**
• **KUBO, Takahiro**
**Tokyo 100-0011 (JP)**
• **KAWABATA, Fumimaru**
**Tokyo 100-0011 (JP)**

• **MURAOKA, Ryuji**
**Tokyo 100-0011 (JP)**
• **SHIOMI, Hiroshi**
**Tokyo 100-0011 (JP)**
• **NAKAJIMA, Yoshiyuki**
**Tokyo 108-0022 (JP)**
• **TOYODA, Masanobu**
**Tokyo 108-0022 (JP)**
• **NAKANISHI, Yasumasa**
**Tokyo 135-8710 (JP)**
• **KIJI, Noboru**
**Tokyo 135-8710 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 674 187    JP-A- 05 096 369**
**JP-A- 08 267 234    JP-B1- 49 001 707**

**Description**

Technical Field

The present invention relates to welded structures with high brittle crack arrestability capable of arresting the propagation of brittle cracks before catastrophic fracture occurs. There is a possibility that the brittle cracks will be generated in a base metal or a weld joint of welded structures, such as mega-container carriers and bulk carriers, formed by welding thick steel plates. More particularly, the present invention relates to a welded structure with high brittle crack arrestability capable of arresting a brittle crack generated in a joined member (web) of a fillet weld joint from propagating to another joined member (flange) even if the brittle crack is generated.

Background Art

Container carriers and bulk carriers, which are examples of welded structures, have large upper apertures to increase the carrying capacity and cargo handling efficiency. In this type of vessel, it is necessary to increase the thickness of the outer plate of the vessel's body to ensure the rigidity and longitudinal strength of the vessel's body.

Recently, the size of container carriers has been increased and large vessels of 6,000 to 20,000 TEU (twenty-foot equivalent unit) have been constructed. Accordingly, the thickness of the outer plates used in such a vessel has been increased to 50 mm or more.

If brittle fracture occurs in a weld of a hull structure of the vessel, it is necessary to stop the propagation of the brittle crack to prevent hull separation. Japanese Unexamined Patent Application Publication No. 2004-232052, for example, describes a structure in which a steel plate with specific microstructure and high resistance to brittle fracture is used as a reinforcing member (also called an aggregate (stiffener)) for the outer plate of the hull of a ship.

Committee No. 147 of the Shipbuilding Research Association of Japan carries out experimental investigations regarding the propagation behavior of brittle cracks in the weld of steel plates used for forming vessels and having a plate thickness of less than 50 mm.

The Committee No. 147 conducted experiments for investigating the propagation path and propagation behavior of brittle cracks that were intentionally formed in the weld. When the fracture toughness of the weld was somewhat ensured, the brittle crack deviated from the weld toward the base metal with high probability due to the influence of welding residual stress. However, in some cases, the brittle crack propagated along the weld. This means that the possibility that the brittle fracture linearly propagates along the weld is not zero.

However, many ships built by welding the steel plates with a plate thickness of less than 50 mm in a manner similar to that in the experiments performed by the Committee No. 147 have been in actual service without problems. In addition, base metals of steel plates with high toughness (e.g., E-grade steel used for shipbuilding) are considered to have high performance in arresting the brittle crack. Therefore, the brittle crack arrestability of the weld of the shipbuilding steel is not required by the Rules and Guidance for the Survey and Construction of Steel Ships and the like.

However, the steel plates used for building the mega-container carriers of 6,000 TEU or more has a plate thickness of more than 50 mm, and therefore the fracture toughness is reduced due to the thickness effect. In addition, since the welding heat input is increased, the fracture toughness of the weld is further reduced.

Recently, it has been found from the experiments that, with the large-heat-input weld joint of heavy gauge steel plate, there is a possibility that the brittle crack generated in the weld will propagate linearly instead of deviating toward the base metal and do not stop even at the base metal of the steel plate like an aggregate (also called a reinforcing member (stiffener)) (Yamaguchi et al., "Development of Mega-Container Carrier -Practical Use of New High-Strength Heavy Gauge Steel Plate-", Bulletin of The Japan Society of Naval Architects and Ocean Engineers, Vol. 3, p. 70 (2005)). This is a large problem in ensuring safety of the hull structure with steel plates having a plate thickness of 50 mm or more. In addition, it is said that steel plates having special properties for arresting the cracks are necessary.

In view of the above-described situation, an object of the present invention is to provide a welded structure capable of arresting a brittle crack before catastrophic fracture occurs, even when the brittle fracture is generated in a thick steel plate or a weld thereof.

EP 1 674 187 A1 proposes to arrest the propagation of a brittle crack by forming a repair weld with an excellent toughness.

Further, JP 08267234 A which discloses the preamble of claim 1, deals with a welded structure with a filled joint having an unwelded part.

Disclosure of Invention

To solve the above-described problem, the inventors of the present invention have made intensive investigations and found the following fact. That is, by leaving an unwelded part 4 in a butting face between a joined member (web 1) and another joined member (flange 2) in a cross section of a fillet weld section such that the dimension n of the unwelded part 4 corresponds to the brittle crack arresting performance of the joined member (flange 2), the propagation of the brittle crack in a thick plate with a plate thickness of 50 mm or more can be stopped at the butting face between the web 1 and the flange 2 in the fillet weld section.

The inventors have also found the following fact. That is, in the case where the joined member (web 1) is formed by joining steel plates with a butt joint 11, the unwelded part 4 having a dimension corresponding to the brittle crack arresting performance of the joined member (flange 2) can be provided in the butting face between the weld of the butt joint 11 and the joined member (flange 2). In such a case, the brittle crack arrestability similar to that in the above-described structure can be obtained. Thus, the present invention provides the following welded structures.

1. A welded structure with high brittle crack arrestability including a filled weld joint having an unwelded part 4 in a butting face between a web 1 and a flange 2, wherein a width n of the unwelded part 4 in a cross section of the filled weld joint 9, the ration X(%) of the width n to the sum L of a plate thickness t of the web 1 and leg lengths 3 (3a and 3b) of filled weld metal 5 at the left and right, and a brittle crack arresting toughness Kca (N/mm$^{3/2}$) of the joined member (flange 2) at a service temperature satisfy the expression given below. Here, the ratio X is also called an unwelded part ratio X.

$$X\ (\%)\ \geq\ \{5900\ -\ Kca\ (N/mm^{3/2})\}/85$$

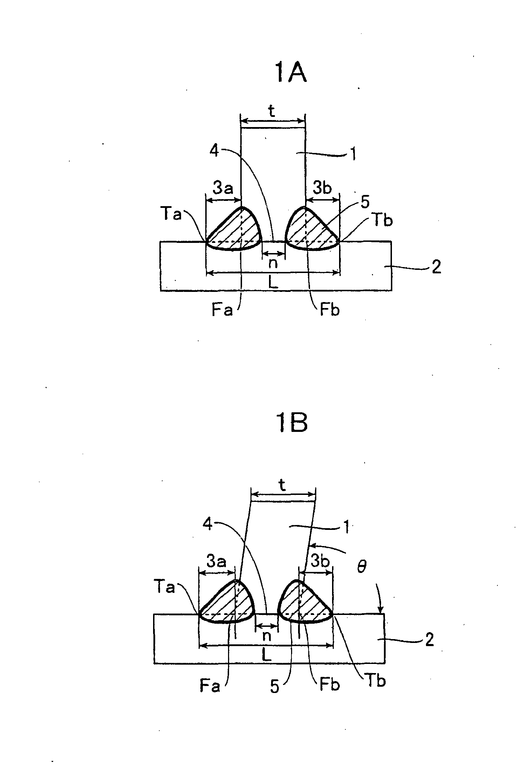

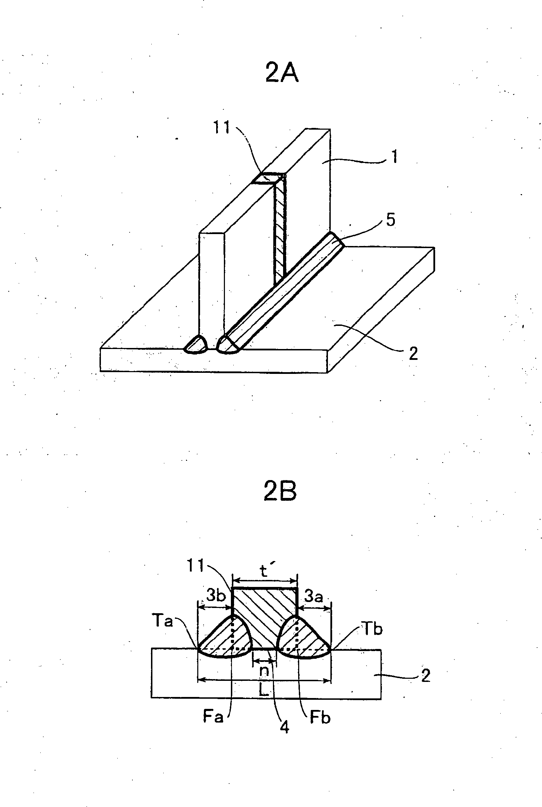

Referring to Figs. 1A, 1B, and 2B, the "leg lengths 3 (3a and 3b) of the fillet weld metal 5" are the lengths 3a and 3b from the ends (Fa and Fb) of the base metal before welding to the toes (Ta and Tb), respectively, of the weld metal. In addition, "the plate thickness t of the web 1" in the above items 2, 3, 5, and 6 is the length t of a section in which the web 1 and the flange 2 are in contact with each other or the weld metal height (t') of the butting weld. However, "the plate thickness t of the web 1" is not always equal to the actual plate thickness t of the web 1, but is larger than the plate thickness (t) of the web 1 when the crossing angle θ of the web 1 and the flange 2 is not equal to the right angle or when there is excess weld metal. As described below, "the sum L of the plate thickness t of the web 1 and the leg lengths 3 (3a and 3b) of the fillet weld metal 5 at the left and right" is equal to the distance L between the toe Ta of the fillet weld metal 5 at the left and the toe Tb of the fillet weld metal 5 at the right. To obtain L, it is easier to measure the distance between Ta and Tb. Therefore, it is not necessary to measure the crossing angle θ or the weld metal height t', and L is expressed as "the plate thickness t of the web 1".

According to the present invention, the unwelded part 4 having a suitable dimension n is left in the fillet weld metal 5 in the butting face between the web 1 and the flange 2 in accordance with the brittle crack arresting performance of the steel plate that functions as the flange 2. Therefore, propagation of a brittle crack in a thick plate with a plate thickness of 50 mm or more can be arrested, which is difficult to achieve in the structure of the related art.

As a result, even if a brittle crack is generated in a vessel body and propagation of the brittle crack occurs, the risk of catastrophic fracture, such as hull separation, can be avoided. Thus, the present invention contributes to ensuring the safety of the steel structure, in particular, the hull structure, and provides significant industrial advantages.

In addition, steel plates having different brittle crack arresting performances (steel plates with different manufacturing costs) can be suitably used by adjusting the dimension of the unwelded part in the constructing process. Thus, it is not necessary to use special steel plates and the total manufacturing cost of the welded structure can be reduced without sacrificing the safety.

Brief Description of Drawings

Fig. 1A is a diagram illustrating a fillet weld joint 9 in which a web 1 and a flange 2 are perpendicular to each other.
Fig. 1B is a diagram illustrating the fillet weld joint 9 in which the web 1 and the flange 2 are inclined with respect to each other.
Fig. 2A is an external view of the fillet weld joint 9 in which the web 1 is formed by joining steel plates with a butt joint 11 and in which the butt joint 11 and the flange 2 are perpendicular to each other.
Fig. 2B is a schematic diagram illustrating the shape of cross section of the butt joint 11 in the web 1 formed by joining steel plates with the butt joint 11.
Fig. 3A is a diagram illustrating a cross-shaped ESSO test piece in which the web 1 is made of a base metal that is free from the butt joint 11.
Fig. 3B is a diagram illustrating a cross-shaped ESSO test piece in which the web 1 has the butt joint 11.

Fig. 4 is a graph illustrating the test result obtained by the cross-shaped ESSO test piece shown in Fig. 3A.
Fig. 5 is a graph illustrating the test result obtained by the cross-shaped ESSO test piece shown in Fig. 3B.

(Reference Numerals)

1: web (t: plate thickness of web), 2: flange, 3: leg length (3a: leg length of fillet weld metal 5 at the left, 3b: leg length of fillet weld metal 5 at the right), 4: unwelded part (n: width of unwelded part), 5: fillet weld metal, 7: mechanical notch, 8: provisional weld, 9: T-shaped fillet weld joint (Fa, Fb: ends of base metal before welding, Ta, Tb: toes of weld metal at the left and right), 10: slit, 11: butt joint portion (t': weld metal height of butt joint), $\theta$: crossing angle of web and flange, L: sum of plate thickness (t, t') of web and leg lengths (3a and 3b) of fillet weld metal 5 at the left and right (L=t+3a+3b or L=t'+3a+3b) (equal to distance between Ta and Tb)

Best Modes for Carrying Out the Invention

Figs. 1A and 1B are sectional views illustrating the shape of cross section of a fillet weld joint. Fig. 1A shows the case where a joined member (web) (hereinafter called a web 1) is perpendicularly attached to another joined member (flange) (hereinafter called a flange 2). Fig. 1B shows the case where the web 1 is attached to the flange 2 in an inclined manner.

Components mentioned in the following explanations of reason for limitations of the present invention are those shown in Figs. 1A and 1B. In the fillet weld joint 9 shown in Fig. 1B, a length of a crossing segment of the web 1 and the flange 2, that is, a value obtained as $t/COS(90°-\theta)$ ($\theta$ is the crossing angle of the web 1 and the flange 2 ($\theta<90°$)), where t is a plate thickness of a steel plate forming the web 1, is defined as a plate thickness t of the web 1 used to determine the ratio X(%) described below. As described above, "the sum L of the plate thickness t of the web 1 and the leg lengths 3 (3a and 3b) of fillet weld metal 5 at the left and right" is equal to the distance L between a toe Ta of the fillet weld metal 5 at the left and a toe Tb of the fillet weld metal 5 at the right. Sine it is easier to measure the distance between Ta and Tb, it is not necessary to determine the plate thickness t of the web 1 from the crossing angle $\theta$.

According to the present invention, an unwelded part 4 is left in a butting face between the web 1 and the flange 2 in the fillet weld joint. In the fillet weld joint, the butting face between the web 1 and the flange 2 functions as a crack propagation face. Therefore, the unwelded part 4 is left in the butting face.

Due to the unwelded part 4, the energy release rate (crack growth driving force) of a brittle crack tip that propagates through the web 1 is reduced and the brittle crack easily stops at the butting face.

Since the energy release rate (crack growth driving force) of the brittle crack tip is reduced due to the existence of the unwelded part 4, even if the crack propagates toward the flange 2, the crack arrests at various portions of the fillet weld (the fillet weld metal 5 and heat-affected zone (not shown in Figs. 1A and 1B)) or at the base metal of the flange 2.

The dimension n of the unwelded part 4 in the butting face between the web 1 and the flange 2 in the cross section of the fillet weld joint is defined in conjunction with a brittle crack arresting toughness Kca ($N/mm^{3/2}$) of the flange 2.

The width dimension n of the unwelded part 4 in the cross section of the fillet weld joint, the ratio X(%) (X = 100X·n/L) of the width dimension n to the sum L of the plate thickness t of the web 1 and the leg lengths 3 (3a and 3b) of the fillet weld metal 5 at the left and right, and the brittle crack arresting toughness Kca ($N/mm^{3/2}$) of the steel plate used for the flange 2 at the service temperature are set so as to satisfy the following expression (1):

$$X\ (\%) \geq \{5900 - Kca\ (N/mm^{3/2})\}/85 \cdots (1)$$

As the ratio X(%) is reduced, the reduction in the energy release rate (crack growth driving force) of the brittle crack tip is also reduced, which means that the brittle crack does not easily arrest. However, if the Kca value of the steel plate used for the flange 2 is large, the brittle crack can be stopped.

The width n of the unwelded part 4 of the fillet weld joint in the cross section of the fillet weld is preferably in the range of 15% to 90% (X) of the sum L of the plate thickness t of the web 1 and the leg lengths 3 (3a and 3b) of the fillet weld metal 5 at the left and right.

If the width dimension n of the unwelded part 4 is less than 15% of the sum L of the plate thickness t of the web 1 and the leg lengths 3 (3a and 3b) of the fillet weld metal 5 at the left and right of the web 1, the reduction in the energy release rate (crack growth driving force) of the brittle crack tip becomes small and it becomes difficult to arrest the brittle crack.

If the width dimension n of the unwelded part 4 is more than 90% (X) of the sum L of the plate thickness t of the web 1 and the leg lengths 3 (3a and 3b) of the fillet weld metal 5 at the left and right of the web 1, it becomes difficult to ensure the strength of the joint. Therefore, according to the present invention, X is preferably set to 15% or more and 90% or less.

More preferably, the unwelded part 4 is left in the butting face between the base metal of the web 1 and the flange 2 along the entire length of the fillet weld joint 9, as described above. In such a case, the brittle crack can be arrested irrespective of the position where the brittle crack is generated in the base metal of the web 1 and the risk of brittle fracture can be reduced. Thus, the unwelded part 4 is preferably left along the entire length of the fillet weld joint 9 of the web 1.

The unwelded part ratio X is the average of values obtained at arbitrary cross sections of the fillet weld joint having the unwelded part.

The brittle fracture rarely occurs in the steel plate base metal in which the number of defects is small, and many accidents in the past occurred due to the brittle fracture in the weld. Figs. 2A and 2B show the fillet weld joint 9 in which the web 1 is formed by joining steel plates with a butt joint 11 and weld of the butt joint 11 (hereinafter called the butt joint 11) crosses the flange 2. Fig. 2A shows an external view of the fillet weld joint 9 and Fig. 2B shows a schematic diagram illustrating the shape of cross section of the butt joint 11.

In the fillet weld joint 9 shown in Figs. 2A and 2B, the unwelded part 4 must be left at least in the butting face between the butt joint 11 and the flange 2 to prevent the propagation of the brittle crack generated in the butt joint 11.

Since there is a possibility that the brittle crack will be deviated toward the base metal, the unwelded part 4 is preferably left over a region of the fillet weld joint 9 including the butt joint 11 and extending by 500 mm on either side of the butt joint 11. More preferably, the unwelded part 4 is also left in the butting face between the base metal of the web 1 and the flange 2 as described above. In such a case, also when the brittle crack is generated in the base metal of the web 1, the brittle crack can be easily arrested. Therefore, the unwelded part 4 may be left over the entire length of the fillet weld joint 9 of the web 1.

The width n of the unwelded part 4 in the cross section of the fillet weld joint 9 in a crossing segment where the butt joint 11 crosses the flange 2, the ratio X(%) of the width n to the sum L of the thickness t of the butt joint 11 in the plate thickness direction of the web 1, that is, the average of the weld metal height t' of the butt joint 11, and the leg lengths 3 (3a and 3b) of the fillet weld metal 5 at the left and right (the definition thereof is the same as that in Figs. 1A and 1B), and the brittle crack arresting toughness Kca (N/mm$^{3/2}$) of the steel plate used for the flange 2 at the service temperature are preferably set so as to satisfy the above expression (1). The ratio X(%) is preferably determined from the shape of cross section of the butt joint 11 at a most brittle section that is, at a BOND section. As described above, the "the sum L of the plate thickness t of the web 1 and the leg lengths 3 (3a and 3b) of the fillet weld metal 5 at the left and right" is equal to the distance L between the toe Ta of the fillet weld metal 5 at the left and the toe Tb of the fillet weld metal 5 at the right. Therefore, it is easier to measure the distance between Ta and Tb than to determine the average of the weld metal height t'.

In addition, also in the crossing segment of the butt joint 11 and the flange 2, the width n of the unwelded part 4 is preferably in the range of 15% to 90% (X) of the sum L of the average of the weld metal height t' of the butt joint 11 and the leg lengths 3 (3a and 3b) of the fillet weld metal 5 at the left and right.

Although Figs. 2A and 2B show the case in which the butt joint 11 of the web 1 and the flange 2 are perpendicular to each other, they may also be inclined with respect to each other at a crossing angle θ. In the fillet weld joint shown in Figs. 2A to 2B, first, the web 1 is obtained by butt welding, and then the thus obtained butt joint is fillet-welded to the flange 2.

The welded structure according to the present invention includes the above-described fillet weld joint 9. The present invention can be applied to, for example, a hull structure having an outer plate of a vessel's body as the flange 2 and a bulk head as the web 1 or a hull structure having a strength deck as the flange 2 and a hatch coaming as the web 1.

In the welded structure according to the present invention, the risk of occurrence of the brittle crack in the base metal or the butt weld of the web 1 is relatively higher in a central section of the vessel's body, at which a large bending stress is applied by the waves, than in front and rear sections of the vessel's body. Therefore, the unwelded part 4 is preferably provided in the fillet weld joint 9 of the outer plate of the vessel's body in the central section thereof. In addition, in the central section of the vessel's body, the unwelded part 4 is preferably left over the entire length of the fillet weld joint 9 so that the brittle crack can be easily arrested irrespective of the position where the brittle crack is generated in the base metal or the butt weld of the web. In such a case, the risk of brittle fracture can be further reduced.

In the front and rear sections of the vessel's body, the risk of occurrence of the brittle crack in the base metal or the butt weld 11 of the web 1 is lower than that in the central section of the vessel's body. Therefore, the unwelded part 4 may be provided such that the unwelded part 4 remains at least at the butt weld 11 of the web 1 and partially remains in the other regions of the fillet weld joint 9. However, also in the front and rear sections of the vessel's body, the unwelded part 4 is preferably is left over the entire length of the fillet weld joint 9. In such a case, the brittle crack can be stopped irrespective of the position where the brittle crack is generated in the base metal or the butt weld 11 of the web 1. Thus, the unwelded part 4 is preferably left over the entire length of the fillet weld joint 9 in the outer plate of the vessel's body over the entire length of the vessel's body.

According to the above-described welded structure of the present invention, the risk of brittle fracture is reduced and the safety of steel structures, in particular, hull structures can be ensured.

The welded structure according to the present invention provides excellent effects in the case where thick plates with a plate thickness of more than 50 mm are used. However, the steel plate thickness may also be less than 50 mm. In the hull structure of the related art, butt welding of the web is performed after the fillet welding. Therefore, the butting face between the butt joint 11 of the web 1 and the flange in the fillet weld joint 9 is welded and the unwelded part 4 cannot be left in the butting surface of the flange 2.

Examples

T-shaped fillet weld joints 9 having various unwelded part ratios X (ratio of the width dimension n of the unwelded portion to the sum L of the plate thickness t of the web 1 and the leg lengths 3 (3a and 3b) of the fillet weld at the left and right of the web 1) were formed using steel plates with various plate thicknesses and brittle crack arresting toughnesses (Kca at -10°C). Two kinds of T-shaped fillet weld joints 9 were formed: the fillet weld joints 9 in which the web 1 is made only of the steel plate base metal and the fillet weld joints 9 in which the web 1 includes the butt joint 11. The butt joint 11 was formed by a single-pass large-heat input welding (expressed as EGW (electro gas arc) or double-electrode EGW in Table 2) or by multilayer carbon-dioxide welding.

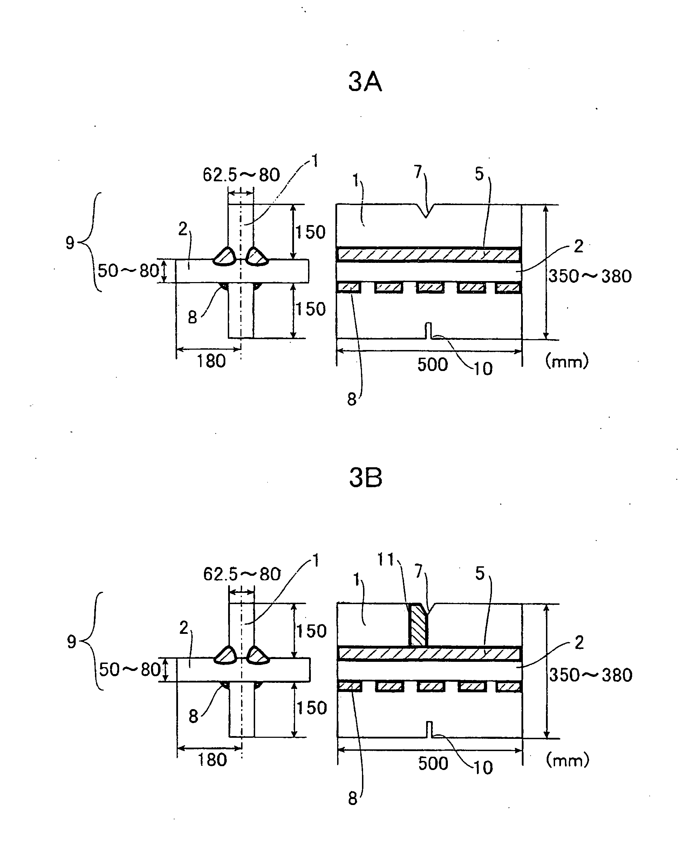

Cross-shaped ESSO test pieces shown in Figs. 3A and 3B were formed using the T-shaped fillet weld joints 9, and were subjected to the brittle crack arrestability test (ESSO test). The cross-shaped ESSO test pieces were obtained by welding a steel plate having the same plate thickness as the web 1 to the bottom of the flange 2 of each T-shaped fillet weld joint 9.

In the cross-shaped ESSO test piece shown in Fig. 3A, the web 1 is formed only of the base metal. In the cross-shaped ESSO test piece shown in Fig. 3B, the web has the butt joint 11 that is perpendicular to the flange 2. A mechanical notch 7 was formed such that a tip end thereof was positioned in the BOND section of the butt joint 11. Fillet welding was performed over the entire length of each test piece, which had a length of 500 mm.

In the ESSO test, an impact was applied to the mechanical notch to generate a brittle crack, and it was observed whether or not the propagation of the brittle crack had stopped in the fillet weld metal 5. In each test, the stress was set to 24 kgf/mm$^2$ and the temperature was set to -10°C. The stress of 24 kgf/mm$^2$ is the maximum allowable stress of a steel plate having a yield strength of around 36 kgf/mm$^2$, which is often used in a vessel's body, and the temperature of -10°C is the design temperature of a ship. Referring to Figs. 3A and 3B, a slit 10 having the same depth as that of the mechanical notch 7 was formed at a position symmetrical to the position where the mechanical notch 7 was formed in the web 1. The slit 10 was formed so as to balance with the notch 7 during the ESSO test (tensile load) to prevent the test piece from being deformed.

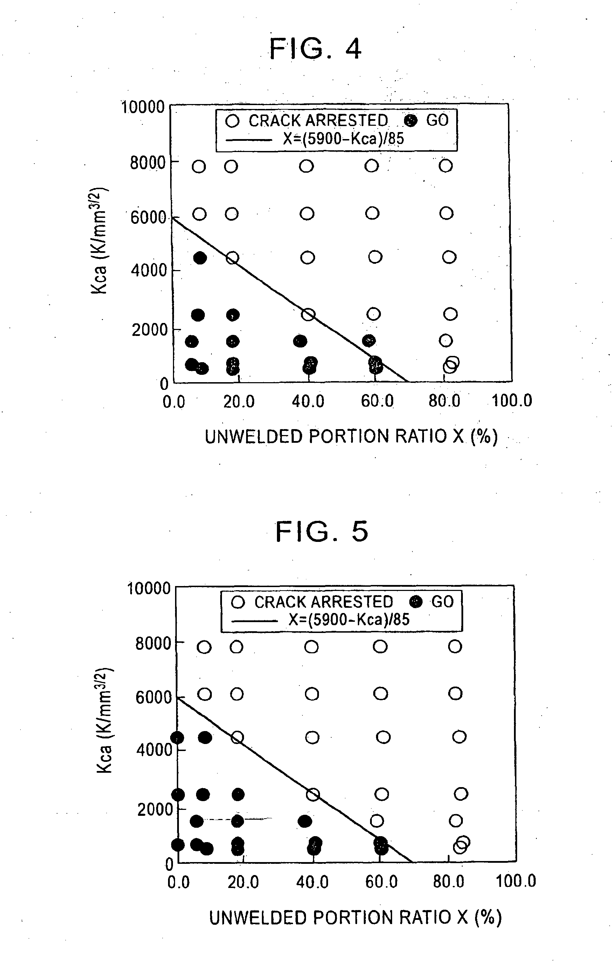

Tables 1 and 2 show the test results along with the plate thickness and Kca of each steel plate. The test result of Table 1 is shown in Fig. 4, and the test result of Table 2 is shown in Fig. 5. Table 1 shows the test result obtained by the cross-shaped ESSO test pieces having the structure shown in Fig. 3A. In the examples of the present invention that satisfy the above expression (1), the brittle crack had arrested without propagating from the web 1 to the flange 2. For the test pieces in which the brittle crack had arrested, "arrested" is shown in the Result column in Tables 1 and 2. For the test pieces in which the brittle crack had propagated to the flange 2, "go" is shown in the Result column in Tables 1 and 2.

Table 2 shows the test result obtained by the cross-shaped ESSO test pieces having the structure in Fig. 3B. In the examples of the present invention that satisfy the above expression (1), the brittle crack had arrested without propagating from the butt joint 11 to the flange 2. In Table 2, Nos. 2-0, 3-0, and 4-0 are the test pieces in which no unwelded part was left in the crossing segment of the butt joint 11 of the web and the flange and in which the crack had propagated to the flange 2. In the Crack-Propagating Section column in Table 2, "WM" shows that the crack propagated through the weld metal and "Bond" shows that the crack propagated through the bond section of the weld joint.

In Tables 1 and 2, the unwelded part ratio X (%) of the fillet weld joint was determined as the average of measurement results obtained in cross sections of the fillet weld joint at two positions separated from the mechanical notch 7 toward the left and right by 50 mm. The Average Leg Length column in Tables 1 and 2 show the average of the leg lengths of the fillet weld metal in cross sections of the fillet weld joint at the two positions. As described above, "the sum L of the plate thickness (t, t') of the web 1 and the leg lengths (3a and 3b) of the fillet weld metal 5 at the left and right" is equal to the distance (L) between the toe (Ta) of the fillet weld metal 5 at the left and the toe (Tb) of the fillet weld metal 5 at the right, and it is easier to measure the distance between Ta and Tb.

Advantages

According to the present invention, the unwelded part 4 having a suitable dimension is left in the fillet weld metal 5 in the butting face between the web 1 and the flange 2 in accordance with the brittle crack arresting performance of the steel plate that functions as the flange 2. Therefore, propagation of a brittle crack in a thick plate with a plate thickness of 50 mm or more can be stopped, which is difficult to achieve in the structure of the related art.

As a result, even if a brittle crack is generated in a vessel body and propagation of the brittle crack occurs, the risk of catastrophic fracture, such as hull separation, can be avoided. Thus, the present invention contributes to ensuring the safety of the steel structure, in particular, the hull structure, and provides significant industrial advantages.

In addition, steel plates having different brittle crack arresting performances (steel plates with different manufacturing costs) can be suitably used by adjusting the dimension n of the unwelded part 4 in the constructing process. Thus, it is not necessary to use special steel plates and the total manufacturing cost of the welded structure can be reduced without sacrificing the safety.

Table 1

| No. | Joined Member (Flange) | | Joined Member (Web) | Fillet Weld Joint | | | (5900-Kca)/85 | Result | Note |
|---|---|---|---|---|---|---|---|---|---|
| | Thickness (mm) | Kca-10°C (N/mm$^{3/2}$) | Thickness (mm) | Average Leg Length (mm) | Unwelded Portion (mm) | Unwelded Portion Ratio X(%) | | | |
| 1-1 | 50 | 1500 | 62.5 | 12.5 | 5.0 | 5.7* | 51.8 | Go | Comparative Example |
| 1-2 | 50 | 1500 | 62.5 | 10.6 | 15.2 | 18.2* | 51.8 | Go | Comparative Example |
| 1-3 | 50 | 1500 | 62.5 | 8.7 | 30.5 | 38.2 | 51.8 | Go | Comparative Example |
| 1-4 | 50 | 1500 | 62.5 | 7.2 | 44.8 | 58.2 | 51.8 | Arrested | Example |
| 1-5 | 50 | 1500 | 62.5 | 5.8 | 60.3 | 81.4 | 51.8 | Arrested | Example |
| 2-1 | 55 | 700 | 65 | 12.9 | 5.2 | 5.7* | 61.2 | Go | Comparative Example |
| 2-2 | 55 | 700 | 65 | 10.8 | 15.9 | 18.4* | 61.2 | Go | Comparative Example |
| 2-3 | 55 | 700 | 65 | 8.9 | 34.3 | 41.4* | 61.2 | Go | Comparative Example |
| 2-4 | 55 | 700 | 65 | 7.4 | 47.8 | 59.9* | 61.2 | Go | Comparative Example |
| 2-5 | 55 | 700 | 65 | 5.7 | 63.5 | 83.1 | 61.2 | Arrested | Example |
| 3-1 | 60 | 2500 | 65 | 13.0 | 7.0 | 7.7* | 40.0 | Go | Comparative Example |
| 3-2 | 60 | 2500 | 65 | 11.0 | 16.2 | 18.6* | 40.0 | Go | Comparative Example |
| 3-3 | 60 | 2500 | 65 | 9.0 | 33.8 | 40.7 | 40.0 | Arrested | Example |
| 3-4 | 60 | 2500 | 65 | 7.5 | 47.5 | 59.4 | 40.0 | Arrested | Example |
| 3-5 | 60 | 2500 | 65 | 6.0 | 63.5 | 82.5 | 40.0 | Arrested | Example |
| 4-1 | 65 | 4500 | 65 | 13.2 | 8.0 | 8.8* | 16.5 | Arrested | Example |

EP 2 018 929 B1

(continued)

| No. | Joined Member (Flange) | | Joined Member (Web) | Fillet Weld Joint | | | (5900-Kca)/85 | Result | Note |
|---|---|---|---|---|---|---|---|---|---|
| | Thickness (mm) | Kca-10°C (N/mm$^{3/2}$) | Thickness (mm) | Average Leg Length (mm) | Unwelded Portion (mm) | Unwelded Portion Ratio X(%) | | | |
| 4-2 | 65 | 4500 | 65 | 11.3 | 16.1 | 18.4 | 16.5 | Arrested | Example |
| 4-3 | 65 | 4500 | 65 | 9.2 | 34.2 | 41.0 | 16.5 | Arrested | Example |
| 4-4 | 65 | 4500 | 65 | 7.4 | 48.3 | 60.5 | 16.5 | Arrested | Example |
| 4-5 | 65 | 4500 | 65 | 5.9 | 63.3 | 82.4 | 16.5 | Arrested | Example |
| 5-1 | 60 | 7800 | 65 | 13.1 | 8.0 | 8.8 | -22.4 | Arrested | Example |
| 5-2 | 60 | 7800 | 65 | 11.1 | 16.0 | 18.3 | -22.4 | Arrested | Example |
| 5-3 | 60 | 7800 | 65 | 9.1 | 33.9 | 40.7 | -22.4 | Arrested | Example |
| 5-4 | 60 | 7800 | 65 | 7.6 | 47.9 | 59.7 | -22.4 | Arrested | Example |
| 5-5 | 60 | 7800 | 65 | 6.1 | 63.4 | 82.1 | -22.4 | Arrested | Example |
| 6-1 | 70 | 500 | 80 | 16.2 | 9.8 | 8.8* | 63.5 | Go | Comparative Example |
| 6-2 | 70 | 500 | 80 | 13.9 | 19.8 | 18.4* | 63.5 | Go | Comparative Example |
| 6-3 | 70 | 500 | 80 | 11.3 | 42.1 | 41.0* | 63.5 | Go | Comparative Example |
| 6-4 | 70 | 500 | 80 | 9.1 | 59.4 | 60.5* | 63.5 | Go | Comparative Example |
| 6-5 | 70 | 500 | 80 | 7.3 | 77.9 | 82.4 | 63.5 | Arrested | Example |
| 7-1 | 80 | 6100 | 80 | 16.1 | 9.8 | 8.8 | -2.4 | Arrested | Example |
| 7-2 | 80 | 6100 | 80 | 13.7 | 19.7 | 18.3 | -2.4 | Arrested | Example |
| 7-3 | 80 | 6100 | 80 | 11.2 | 41.7 | 40.7 | -2.4 | Arrested | Example |
| 7-4 | 80 | 6100 | 80 | 9.4 | 59.0 | 59.7 | -2.4 | Arrested | Example |
| 7-5 | 80 | 6100 | 80 | 7.5 | 78.0 | 82.1 | -2.4 | Arrested | Example |

Samples outside the present invention is marked *

Table 2

| No. | Joined Member (Flange) | | Joined Member (Web [Butt Joint]) | | | | Fillet Weld Joint | | | (5900-Kca)/85 | Result | Note |
|---|---|---|---|---|---|---|---|---|---|---|---|---|
| | Thickness (mm) | Kca-10°C (N/mm$^{3/2}$) | Thickness (mm) | Welding Method | Welding Heat Input (kJ/cm) | Crack-Propagating Section | Average Leg Length (mm) | Unwelded Portion (mm) | Unwelded Portion Ratio X(%) | | | |
| 1-1 | 50 | 1500 | 62.5 | EGW | 350 | WM | 12.8 | 5.1 | 5.8* | 51.8 | Go | Comparative Example |
| 1-2 | 50 | 1500 | 62.5 | EGW | 350 | WM | 10.8 | 15.5 | 18.4* | 51.8 | Go | Comparative Example |
| 1-3 | 50 | 1500 | 62.5 | EGW | 350 | WM | 8.8 | 31.1 | 38.8* | 51.8 | Go | Comparative Example |
| 1-4 | 50 | 1500 | 62.5 | EGW | 350 | WM | 7.4 | 45.7 | 59.2 | 51.8 | Arrested | Example |
| 1-5 | 50 | 1500 | 62.5 | EGW | 350 | WM | 5.9 | 61.5 | 82.8 | 51.8 | Arrested | Example |
| 2-0 | 55 | 700 | 65 | EGW | 400 | Bond | 5.7 | 0.0* | 0.0* | 61.2 | Go | Comparative Example |
| 2-1 | 55 | 700 | 65 | EGW | 400 | Bond | 13.2 | 5.3 | 5.8* | 61.2 | Go | Comparative Example |
| 2-2 | 55 | 700 | 65 | EGW | 400 | Bond | 11.0 | 16.2 | 18.6* | 61.2 | Go | Comparative Example |
| 2-3 | 55 | 700 | 65 | EGW | 400 | Bond | 9.1 | 35.0 | 42.1* | 612 | Go | Comparative Example |
| 2-4 | 55 | 700 | 65 | EGW | 400 | Bond | 7.5 | 48.8 | 60.9* | 61.2 | Go | Comparative Example |
| 2-5 | 55 | 700 | 65 | EGW | 400 | Bond | 5.8 | 64.8 | 84.5 | 61.2 | Arrested | Example |
| 3-0 | 60 | 2500 | 65 | EGW | 430 | Bond | 6.0 | 0.0* | 0.0* | 40.0 | Go | Comparative Example |
| 3-1 | 60 | 2500 | 65 | EGW | 430 | Bond | 13.3 | 7.1 | 7.8* | 40.0 | Go | Comparative Example |
| 3-2 | 60 | 2500 | 65 | EGW | 430 | Bond | 11.2 | 16.5 | 16.9* | 40.0 | Go | Comparative Example |
| 3-3 | 60 | 2500 | 65 | EGW | 430 | Bond | 9.2 | 34.5 | 41.4 | 40.0 | Arrested | Example |

| No. | Joined Member (Flange) | | Joined Member (Web [Butt Joint]) | | | | Fillet Weld Joint | | | (5900-Kca)/85 | Result | Note |
|---|---|---|---|---|---|---|---|---|---|---|---|---|
| | Thickness (mm) | Kca-10°C (N/mm$^{3/2}$) | Thickness (mm) | Welding Method | Welding Heat Input (kJ/cm) | Crack-Propagating Section | Average Leg Length (mm) | Unwelded Portion (mm) | Unwelded Portion Ratio X(%) | | | |
| 3-4 | 60 | 2500 | 65 | EGW | 430 | Bond | 7.7 | 48.5 | 60.3 | 40.0 | Arrested | Example |
| 3-5 | 60 | 2500 | 65 | EGW | 430 | Bond | 6.1 | 64.8 | 83.9 | 40.0 | Arrested | Example |
| 4-0 | 65 | 4500 | 65 | Multilayer CO2 | 17 | Bond | 6.0 | 0.0* | 0.0* | 16.5 | Go | Comparative Example |
| 4-1 | 65 | 4500 | 65 | Multilayer CO2 | 17 | Bond | 13.5 | 8.2 | 8.8* | 16.5 | Go | Comparative Example |
| 4-2 | 65 | 4500 | 65 | Multilayer CO2 | 17 | Bond | 11.5 | 16.4 | 18.7 | 16.5 | Arrested | Example |
| 4-3 | 65 | 4500 | 65 | Multilayer CO2 | 17 | Bond | 9.4 | 34.9 | 41.6 | 16.5 | Arrested | Example |
| 4-4 | 65 | 4500 | 65 | Multilayer CO2 | 17 | Bond | 7.5 | 49.3 | 61.5 | 16.5 | Arrested | Example |
| 4-5 | 65 | 4500 | 65 | Multilayer CO2 | 17 | Bond | 6.0 | 64.6 | 63.8 | 16.5 | Arrested | Example |
| 5-1 | 60 | 7800 | 65 | EGW | 430 | Bond | 13.4 | 8.2 | 8.9 | -22.4 | Arrested | Example |
| 5-2 | 60 | 7600 | 65 | EGW | 430 | Bond | 11.3 | 16.3 | 18.6 | -22.4 | Arrested | Example |
| 5-3 | 60 | 7800 | 65 | EGW | 430 | Bond | 9.3 | 34.6 | 41.4 | -22.4 | Arrested | Example |
| 5-4 | 60 | 7800 | 65 | EGW | 430 | Bond | 7.8 | 48.9 | 60.7 | -22.4 | Arrested | Example |
| 5-5 | 60 | 7800 | 65 | EGW | 430 | Bond | 6.2 | 64.7 | 83.5 | -22.4 | Arrested | Example |
| 6-1 | 70 | 500 | 80 | Multilayer CO2 | 20 | WM | 16.6 | 10.0 | 8.9* | 63.5 | Go | Comparative Example |
| 6-2 | 70 | 500 | 80 | Multilayer CO2 | 20 | WM | 14.2 | 20.2 | 18.7* | 63.5 | Go | Comparative Example |
| 6-3 | 70 | 500 | 80 | Multilayer CO2 | 20 | WM | 11.5 | 42.9 | 41.6* | 63.5 | Go | Comparative Example |

EP 2 018 929 B1

(continued)

| No. | Joined Member (Flange) | | Joined Member (Web [Butt Joint]) | | | | Fillet Weld Joint | | | (5900-Kca)/85 | Result | Note |
|---|---|---|---|---|---|---|---|---|---|---|---|---|
| | Thickness (mm) | Kca-10°C (N/mm$^{3/2}$) | Thickness (mm) | Welding Method | Welding Heat Input (kJ/cm) | Crack-Propagating Section | Average Leg Length (mm) | Unwelded Portion (mm) | Unwelded Portion Ratio X(%) | | | |
| 6-4 | 70 | 500 | 80 | Multilayer CO2 | 20 | WM | 9.3 | 60.6 | 61.5* | 63.5 | Go | Comparative Example |
| 6-5 | 70 | 500 | 80 | Multilayer CO2 | 20 | WM | 7.4 | 79.5 | 83.8 | 63.5 | Arrested | Example |
| 7-1 | 80 | 6100 | 80 | Double Electrode EGW | 610 | Bond | 16.4 | 10.0 | 8.9 | -2.4 | Arrested | Example |
| 7-2 | 80 | 6100 | 80 | Double Electrode EGW | 610 | Bond | 13.9 | 20.1 | 18.6 | -2.4 | Arrested | Example |
| 7-3 | 80 | 6100 | 80 | Double Electrode EGW | 610 | Bond | 11.4 | 42.6 | 41.4 | -2.4 | Arrested | Example |
| 7-4 | 80 | 6100 | 80 | Double Electrode EGW | 610 | Bond | 9.5 | 60.1 | 60.7 | -2.4 | Arrested | Example |
| 7-5 | 80 | 6100 | 80 | Double Electrode EGW | 610 | Bond | 7.7 | 79.6 | 83.5 | -2.4 | Arrested | Example |
| Samples outside the present invention is marked * | | | | | | | | | | | | |

**Claims**

1.  A welded structure with high brittle crack arrestability, comprising a fillet weld joint having an unwelded part (4) in a butting face between a web (1) and a flange (2) wherein a width (n) of the unwelded part (4) is defined in a cross section of the fillet weld joint (9),
    **characterized in that**
    the ratio X (%) of the width (n) to the sum (L) of a plate thickness (t) of the web (1) and leg lengths (3) of fillet weld at the left and right, and a brittle crack arresting toughness Kca (N/mm$^{3/2}$) of the flange at a service temperature satisfy the following expression:

$$X \ (\%) \ \geq \ (5900 \ - \ Kca) \ /85$$

2.  The welded structure with high brittle crack arrestability according to claim 1, wherein the web is contained by joining steel plates with a butt joint (11) and weld of the butt joint in the web crosses the flange in the fillet weld joint, and wherein the unwelded part in the butting face between the web and the flange is in at least a butting face between the weld of the butt joint in the web and the flange.

3.  The welded structure with high brittle crack arrestability according to claim 1, wherein the unwelded part ratio X of the unwelded part of the fillet weld joint in the cross section of the fillet weld joint with respect to the sum of the plate thickness of the web and the leg lengths of the fillet weld metal at the left and right is in the range of 15% to 90%.

**Patentansprüche**

1.  Geschweißte Struktur mit einer hohen Sprödbruchhemmfähigkeit, mit einer Kehlnahtverbindung mit einem ungeschweißten Teil (4) in einer Anliegefläche zwischen einem Steg (1) und einem Flansch (2), wobei eine Breite (n) des ungeschweißten Teils (4) in einem Querschnitt der Kehlnahtverbindung (9) definiert ist,
    **dadurch gekennzeichnet, dass**
    das Verhältnis X (%) der Breite (n) zur Summe (L) einer Plattendicke (t) des Stegs (1) und der Schenkellängen (3) der Kehlnaht zur Linken und zur Rechten und einer Sprödbruchhemmfestigkeit Kca (N/mm$^{3/2}$) des Flanschs bei einer Betriebstemperatur den folgenden Ausdruck erfüllt:

$$X(\%) \ \geq \ (5900 \ - \ Kca)/85$$

2.  Geschweißte Struktur mit einer hohen Sprödbruchhemmfähigkeit nach Anspruch 1, bei welcher der Steg enthalten wird, indem Stahlplatten mit einer Anliegeverbindung (11) verbunden werden und die Verschweißung der Anliegeverbindung in dem Steg den Flansch in der Kehlnahtverbindung quert und wobei der ungeschweißte Teil in der Anliegefläche zwischen dem Steg und dem Flansch wenigstens in einer Anliegefläche zwischen der Verschweißung der Anliegeverbindung in dem Steg und dem Flansch ist.

3.  Geschweißte Struktur mit einer hohen Sprödbruchhemmfähigkeit nach Anspruch 1, bei der das Verhältnis X vom ungeschweißten Teil der Kehlnahtverbindung in dem Querschnitt der Kehlnahtverbindung mit Bezug auf die Summe der Plattendicke des Stegs und der Schenkellängen des Kehlnahtmetalls zur Linken und zur Rechten im Bereich von 15 % bis 90 % liegt.

**Revendications**

1.  Structure soudée avec une aptitude élevée d'arrêt de fissures fragiles, comprenant un joint de soudure d'angle ayant une partie non soudée (4) dans une face de butée entre une âme (1) et une bride (2), dans laquelle une largeur (n) de la partie non soudée (4) est définie dans une section transversale du joint de soudure d'angle (9),
    **caractérisée en ce que**
    le rapport X (%) de la largeur (n) sur la somme (L) d'une épaisseur de plaque (t) de l'âme (1) et des côtés (3) d'une soudure d'angle à gauche et à droite, et une ténacité d'arrêt de fissures fragiles Kca (N/mm$^{3/2}$) de la bride à une température de service satisfont l'expression suivante :

$$X\ (\%)\ \geq\ (5900\ -\ Kca)\ /85$$

2. Structure soudée avec une aptitude élevée d'arrêt de fissures fragiles selon la revendication 1, dans laquelle l'âme est contenue par assemblage de plaques d'acier avec un joint bout à bout (11) et une soudure du joint bout à bout dans l'âme traverse la bride dans le joint de soudure d'angle, et dans laquelle la partie non soudée dans la face de butée entre l'âme et la bride est dans au moins une face de butée entre la soudure du joint bout à bout dans l'âme et la bride.

3. Structure soudée avec une aptitude élevée d'arrêt de fissures fragiles selon la revendication 1, dans laquelle le rapport de partie non soudée X de la partie non soudée du joint de soudure d'angle dans la section transversale du joint de soudure d'angle par rapport à la somme de l'épaisseur de plaque de l'âme et des côtés du métal de soudure d'angle à gauche et à droite se trouve dans la plage allant de 15% à 90%.

1A

1B

## 2A

## 2B

3A

3B

# FIG. 4

# FIG. 5

**EP 2 018 929 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004232052 A
- EP 1674187 A1

- JP 08267234 A

**Non-patent literature cited in the description**

- **YAMAGUCHI et al.** Development of Mega-Container Carrier -Practical Use of New High-Strength Heavy Gauge Steel Plate. *Bulletin of The Japan Society of Naval Architects and Ocean Engineers,* 2005, vol. 3, 70